# EUROPÄISCHE PATENTSCHRIFT

(11) **EP 2 108 335 B1**
(45) Veröffentlichungstag und Bekanntmachung des Hinweises auf die Patenterteilung: **26.02.2014**
(21) Anmeldenummer: 09156554.9
(22) Anmeldetag: 27.03.2009
(51) Int. Cl.: A61C 13/20

(54) **Vorrichtung zur Anfertigung einer Muffel**
Device for preparing a muffle
Dispositif de création d'une moufle

(30) Priorität: 08.04.2008 DE 102008017784
(43) Veröffentlichungstag der Anmeldung: 14.10.2009
(73) Patentinhaber: Ivoclar Vivadent AG, 9494 Schaan (LI)
(72) Erfinder: Bertsch, Diethard, AT-6811, Göfis (AT)
(74) Vertreter: Splanemann

(56) Entgegenhaltungen:
- DE-U1- 9 001 740
- DE-U1-202005 001 344
- DE-U1-202005 003 014

## Beschreibung

Die Erfindung betrifft eine Vorrichtung zum Anfertigen einer Muffel, gemäß dem Oberbegriff von Anspruch 1.

Seit langem ist es bekannt, Vorrichtungen als Hilfsmittel zu verwenden, um die Herstellung geeigneter Formen für die Herstellung von Zahnrestaurationsteilen zu vereinfachen. So ist es beispielsweise gemäß der DE 539 734 bekannt geworden, für das Formen des Auskleidungsmaterials, das einen hohen Gehalt an Gips hat und insofern einer Muffel entspricht, einen sogenannten Schmelztiegelformer zu verwenden, wobei dort eine im Wesentlichen konische Grundplatte und ein Auskleidungsring als Manschette verwendet wird.

Bereits bei dieser Lösung lässt sich ein Formhohlraum, der zunächst als Positivform in Wachs modelliert ist, in der Muffel erzeugen, der dann nach Aushärten als Pressraum für die Dentalrestauration dient.

Aus der DE-GM 900 17 40 U1 ist eine demgegenüber wesentlich verbesserte Vorrichtung zum Anfertigen einer Muffel bekannt. Bei dieser Lösung ist ein zentraler Formansatz vorgesehen, der aus einem Stirnwandteil vorspringt und das Anwachsen von Modellen auf seiner Zahnstützfläche erlaubt. Nach dem Erhärten der Muffel muss für die Beibringung der Dentalrestauration der Formansatz samt dem Stirnwandteil abgezogen werden, so dass dort eine gewisse Festigkeit von Nöten ist, um die erwünschte saubere Trennung von Muffel und Wachs sicherzustellen.

Diese Lösung bedingt gerade bei einem zylindrischen Aufbau des Formansatzes eine gewisse Festigkeit des Formansatzes und damit auch eine vergleichsweise hohe Wandstärke des Formansatzes, die beispielsweise deutlich höher ist als die Wandstärke der Manschette, die die Muffel umgibt.

Um das Ausziehen eines derartigen Formansatzes zu erleichtern, kann der Formansatz gedreht werden, und gleichzeitig herausgezogen werden. Dies erleichtert auch das Ablösen ohne Beeinträchtigung oder Schädigung der Muffel.

Ein derartiges Verdrehen ist jedoch nur bei kreissymmetrischen Formen des Formansatzes möglich, und auch nur dann, wenn lediglich ein Formansatz vorgesehen ist. In diesem Zusammenhang ist es auch vorgeschlagen worden, spezielle Abziehvorrichtungen für die Formansätze zu realisieren, die mit Abziehwerkzeugen verbunden sind. Zwar lässt sich mit einer derartigen Abziehvorrichtung ein Formansatz aus der Muffel entfernen. Die vergleichsweise hohen Kräfte, die die Adhäsion zwischen Formansatz und Muffel überwinden müssen, gefährden jedoch die Unversehrtheit der Muffel, so dass sich diese Lösung nicht durchgesetzt hat.

Eine weitere Vorrichtung zum Anfertigen einer Muffel ist aus der DE-U-20 2005 003 014 bekannt.

Ferner ist bereits vorgeschlagen worden, zur Erleichterung der Entformung derartige Formansätze nicht zylindrisch, sondern leicht kegelig auszugestalten, oder ggf. auch leicht ballig. Zwar lässt sich hierdurch die Entformung begünstigen, jedoch hat sich diese Lösung nicht durchgesetzt, nachdem es hierbei nicht möglich ist, den in der Muffel erzeugten Ansatzkanal als Presskanal zu verwenden, da ansonsten in Hinblick auf die konische Form der zylindrische Pressrohling seitlich ausweicht, was zu gravierenden Verstopfungen und jedenfalls dazu führt, dass nicht sichergestellt ist, dass Dentalmaterial in halbfertigem Zustand seitlich neben dem Pressstempel vorbeitritt, so dass der Formhohlraum nicht vollständig gefüllt ist.

Ferner sind verschiedene andere Versuche unternommen worden, die Erstellung von Muffeln zu verbessern. So hat man versucht, den Durchmesser oder mindestens die Querschnittsfläche eines Presskanals zu erhöhen, um auch größere Dentalrestaurationsteile zu erzeugen, oder ggf., um mehrere Dentalrestaurationsteile zu erzeugen. Eine Vergrößerung der Querschnittsfläche bedingt aber auch einen entsprechend erhöhten Pressdruck, so dass dann auch die Wandstärke der Muffel erhöht werden muss, um dem erhöhten Pressdruck standzuhalten. Zudem hat sich gezeigt, dass ein erhöhter Pressdruck leichter zur "Einfederung" der Muffel und damit zur Reduktion der Formtreue führt, so dass insgesamt die Vergrößerung der Querschnittsfläche des Presskanals sich als nicht erfolgversprechend herausgestellt hat.

Daher liegt der Erfindung die Aufgabe zugrunde, die Herstellung von Dentalrestaurationen über Muffeln zu vereinfachen und zu optimieren, und hierzu eine entsprechend geeignete Vorrichtung gemäß dem Oberbegriff von Anspruch 1 bereitzustellen.

Diese Aufgabe wird erfindungsgemäß durch Anspruch 1 gelöst. Vorteilhaft Weiterbildungen ergeben sich aus den Unteransprüchen.

Erfindungsgemäß ergibt sich durch die "Parallelisierung" der Presskanäle eine vergleichsweise geringe Belastung der Muffel trotz einer guten Pressleistung und eines guten Presswegs pro Zeit. Ähnlich wie ein Gitter strukturell belastbarer ist als ein Formelement mit einem einzigen großen Loch, ist erfindungsgemäß die Muffel recht druckfest, ohne dass die Wandstärke nennenswert erhöht werden müsste. Hierbei kommt der Erfindung zugute, dass das Abplatzen der Muffel im Grunde nur nach außen erfolgen kann, so dass die nach innen wirkenden Druckkräfte sich kompensieren.

Erfindungsgemäß lässt sich gerade auch eine Muffel mit recht eng beabstandeten Presskanälen besonders günstig mit einem speziellem flächigen Muffeleinsatz, aus dem Presskanal-Formelemente herausragen, erzeugen.

Die Presskanal-Formelemente sind besonders dünnwandig, so dass sie auch ohne Weiteres ausbrennbar sind, wenn sie sich nicht nach der Art einer Haut vom dem Gips abziehen lassen. Durch die Erwärmung über dem Verdampfungspunkt des Materials für die Presskanal-Formelemente entsteht die Gewähr, dass das Presskanal-Formelement rückstandsfrei entfernt wird, so dass der Presskanal exakt in der gewünschten Form zur Verfügung steht.

Bei Bedarf können die Presskanal-Formelemente zusammen mit einem flächigen Abschnitt des Muffeleinsatzes, also einstückig realisiert sein, der dann bevorzugt ebenfalls ausbrennbar ausgestaltet ist. Die dem flächigen Abschnitt gegenüberliegende freie Stirnfläche ist geschlossen ausgebildet und nimmt die beispielsweise in Wachs geformte Positivform der Dentalrestauration auf. Dort sind in an sich bekannter Weise Anwachskanäle vorgesehen, die der Weiterleitung der geschmolzenen Dentalkeramik in den Formhohlraum ermöglichen.

Erfindungsgemäß ist es durch die Realisierung exakt paralleler Presskanäle durch die zylindrischen Presskanal-Formelemente, die durch ihre rückstandsfreie Ausbrennbarkeit entsprechende Formen sicherstellen, gewährleistet, dass die Pressstempel für die parallele Verpressung der Rohlinge auch seitlich spielarm, aber präzise geführt werden, so dass mit guten Pressergebnissen zu rechnen ist.

Erfindungsgemäß können parallel mehrere Pellets oder Pressrohlinge mit vergleichsweise hohem Gewicht der Presskeramik von mindestens 20 Gramm, aber bei Bedarf sogar bis zu 40 Gramm verpresst werden, was einem Wachsgewicht von 12 Gramm entspricht.

Erfindungsgemäß ist es nämlich besonders günstig, dass die auf der erfindungsgemäßen freien Stirnfläche der erfindungsgemäßen Formelemente angewachsten Dentalrestaurationen auch miteinander verbunden sein können, so dass es erfindungsgemäß möglich ist, wesentlich größere und auch presstechnisch optimierte Dentalkeramiken zu realisieren. Erfindungsgemäß lassen sich damit anspruchsvolle Restaurationsaufgaben nunmehr in einem Zuge und damit deutlich effizienter als bei den bislang bekannten Muffeln erzeugen, ohne dass das bei hohem Drücken zwangsläufig anfallende gefürchtete "Einfedern" des Muffelmaterials die Genauigkeit des Restaurationsergebnisses beeinträchtigen würde.

Es versteht sich, dass die Muffelwandstärke und damit die Größe der Muffel in weiten Bereichen an die Erfordernisse anpassbar ist. Typischerweise wird bei der parallelen Verpressung von beispielsweise 6 Presskanälen die Muffel einen deutlich größeren Durchmesser aufweisen als beispielsweise bei der Lösung gemäß der DE 900 17 40 U1, jedoch keineswegs den 6-fachen Durchmesser. Insgesamt lässt sich durch die Parallelverarbeitung insofern nicht nur die Zykluszeit der Bearbeitung deutlich reduzieren, sondern insbesondere auch Muffelmaterial einsparen, vorausgesetzt, es erfolgt eine parallele Erstellung mehrerer Dentalrestaurationen, wie es erfindungsgemäß möglich ist.

Die Erfindung ist nicht auf die einstückige Realisierung der Presskanal-Formelemente mit einem flächigen Abschnitt des Muffeleinsatzes beschränkt. Beispielsweise können die Formelemente bei Bedarf auch teilweise weggelassen werden, und das so verbleibende "Loch" in dem flächigen Abschnitt des Muffeleinsatzes wird kurzerhand abgedeckt, beispielsweise mit einer entsprechenden Scheibe. Über entsprechende Gießeinsätze, die den wirksamen Durchmesser der Muffel reduzieren, lässt sich dann auch eine verkleinerte Muffel mit beispielsweise lediglich zwei parallelen Presskanal-Formelementen darstellen, die bei Bedarf aber wieder auf die Maximalzahl erweitert werden kann.

Erfindungsgemäß besonders günstig ist es auch, dass der Muffeleinsatz bevorzugt im flächigen Abschnitt von einer Muffelbasis unterstützt ist. Die Muffelbasis ist ein wiederverwendbares Teil und stützt den Muffeleinsatz von unten sicher ab, so dass beim Gießen der gipsartigen Masse in die Manschette der flächige Abschnitt des Muffeleinsatzes sich nicht nach unten ausbeult.

Erfindungsgemäß ist es besonders günstig, wenn die erzeugten Presskanäle voneinander deutlich weniger beabstandet sind als von der Außenwand der Muffel. Der Abstand zwischen den einzelnen Presskanälen kann beispielsweise auf lediglich 5 mm reduziert sein, während der Abstand zum Außendurchmesser der Muffel, also die "Wandstärke" der Muffel, beispielsweise mehr als 2 cm betragen kann. Besonders günstig ist es, wenn der flächige Abschnitt des Muffeleinsatzes sicher auf der Muffelbasis gelagert ist, beispielsweise durch formschlüssigen Eingriff, aber dennoch trennbar ist.

Bevorzugt lässt sich der recht dünnwandige Muffeleinsatz an einer von dem flächigen Abschnitt beabstandeten Stelle des Muffeleinsatzes über eine rastende Verbindung befestigen.

Der Muffeleinsatz ist bevorzugt dünnwandig, aber hart und insofern unelastisch. Beispielsweise kann seine Shore-Härte nach DIN 53505 bzw. DIN 7868 deutlich größer als diejenige von Naturgummi sein und beispielsweise mehr als 70°A, insbesondere 75°A, betragen. Diese Ausgestaltung ermöglicht eine trotz Dünnwandigkeit präzise Ausrichtung der Presskanäle mit exakt parallelen Seitenwänden.

In Frage kommt beispielsweise EPM, also Ethylen-Propylen-Kautschuk mit einer Härte von 85°A, wobei es sich versteht, dass bevorzugt keine Füllstoffe enthalten sein sollten. Grundsätzlich sind hierfür hart eingestellte Polyethylen-Grundstoffe besonders geeignet, die typischerweise rückstandsfrei verbrennen (vgl. auch EP 170 40 01).

Weitere Vorteile, Einzelheiten und Merkmale ergeben aus der nachfolgenden Beschreibung eines Ausführungsbeispiels anhand der Zeichnung.

Es zeigen:
- Fig. 1: Eine schematische perspektivische Ansicht eines Muffeleinsatzes zur Anwendung bei einer erfindungsgemäßen Vorrichtung, in einer ersten Ausführungsform;
- Fig. 2: Eine Seitenansicht der Vorrichtung gemäß Fig. 1;
- Fig. 3: Eine schematische perspektivische Ansicht der oberen Teile der Vorrichtung gemäß Fig. 1 und 2, wobei zusätzlich die Muffel teilweise dargestellt ist; und
- Fig. 4: Eine Schnittansicht eines Teils der erfindungsgemäßen Vorrichtung, einschließlich eines Teils der Muffel und der Manschette.

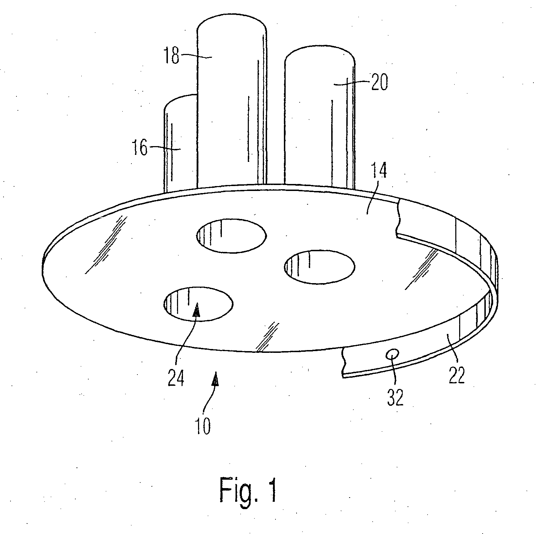

Die in Fig. 1 dargestellte Vorrichtung 10 weist neben anderen Teilen einen Muffeleinsatz 12 auf. Der Muffeleinsatz 12 besteht aus einem flächigen Abschnitt 14 und Presskanal-Formelementen, wobei im dargestellten Ausführungsbeispiel drei Presskanal-Formelemente 16, 18 und 20 vorgesehen sind. Es ist aber auch ohne Weiteres möglich, in einer modifizierten Ausgestaltung der Vorrichtung eine beliebige andere Anzahl von Presskanal-Formelementen zu verwenden, etwa im Bereich von zwei bis zehn Formelementen.

Die Formelemente 16 bis 20 sind zentral angeordnet, so dass sie sich um die Mitte des kreisförmigen flächigen Abschnitts 14 herum erstrecken. Der Abstand zwischen den Formelementen 16 und dem Rand des flächigen Abschnitts 14 ist wesentlich größer, beispielsweise um den Faktor 2 bis 20, als der Abstand der Formelemente untereinander.

Der flächige Abschnitt 14 ist von einem Kragen 22 umgeben, der sich nach der Art einer Schürze nach unten erstreckt, und zwar um etwa ein Zehntel des Durchmessers des Muffeleinsatzes. Der Kragen 22 erhöht die Formstabilität des Muffeleinsatzes 12.

Im dargestellten Ausführungsbeispiel ist der Muffeleinsatz aus dem flächigen Abschnitt 14, den Formelementen 16 - 20 und dem Kragen 22 einstückig ausgebildet, und zwar als Wegwerfteil aus einem vergleichsweise dünnwandigen Kunststoff. Es versteht sich, dass anstelle dessen auch die Formelemente 16 - 20 lösbar an dem flächigen Abschnitt 14 gelagert sein können, wobei eine beliebige geeignete Kupplung dort realisierbar ist.

Es ist auch möglich, grundsätzlich einen Muffeleinsatz mit beispielsweise sechs Formelementen bereitzustellen. Wenn weniger als sechs Dentalrestaurationsteile hergestellt werden oder wenn weniger als sechs Formelemente 16 bis 20 erforderlich sind, können dann kurzerhand die Formelemente unmittelbar an ihrem Ansatz an dem flächigen Abschnitt 14 abgeschnitten werden, beispielsweise mit einem Messer. Die so freigelegte Öffnung kann dann mit einer geeigneten, die Öffnung etwas überlappenden Abdeckscheibe, die beispielsweise aus dem gleichen Material wie der Muffeleinsatz 12 sein kann, abgedeckt werden. Derartige Abdeckscheiben können auch eine zum Rand der Öffnung hinweisende Dichtlippe aufweisen, und es ist auch möglich, sie von unten in die jeweils dort vorliegende Öffnung 24 einzustecken. In diesem Fall sind sie wiederverwendbar, denn sie können abgezogen werden, sobald die gipsartige Masse der Muffel ausgehärtet ist.

Der erfindungsgemäße Muffeleinsatz 12 ist auf einer Muffelbasis 26 angebracht, welche Muffelbasis aussteifend wirkt und so gestaltet ist, dass sie den Muffeleinsatz 12 von unten flächig unterstützt. Hierzu weist die Muffelbasis 26 eine Platte 28 aus einem beispielsweise 1 cm starken Kunststoff auf, an deren Außenrand sich eine Nut 30 erstreckt. Die Nut 30 dient der Aufnahme eines Vorsprungs 32, der an der Innenseite des Kragens 22 des Muffeleinsatzes 12 vorgesehen ist.

Zur Vorrichtung zum Anfertigen einer Muffel 34 gehört auch eine Manschette 36, die in an sich bekannter Weise zylindrisch die Muffel 34 umgibt. Die Manschette 36 überlappt auch den Kragen 22 nach unten und stützt sich auf einem Sockel 38 der Muffelbasis 26 ab. Durch das Überlappen wird auch der Kragen 22 an der Muffelbasis 26 anliegend gehalten, so dass bei aufgedeckter Manschette 36 die Muffelbasis 26 und der Muffeleinsatz 12 unlösbar miteinander verbunden sind.

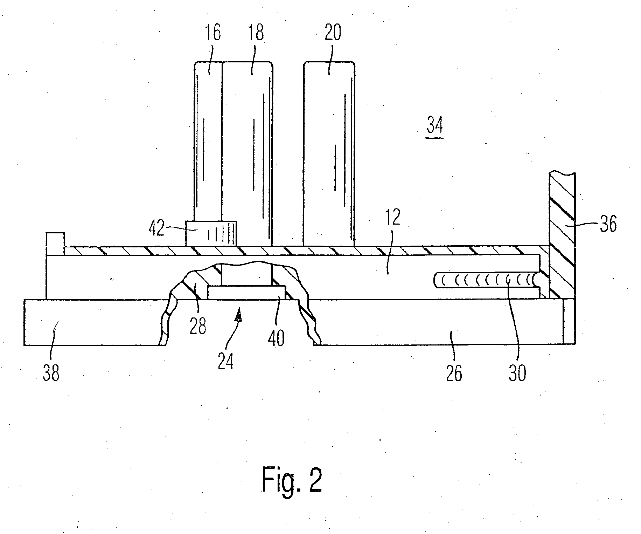

Aus Fig. 2 ist ersichtlich, dass das Formelement 18 anders ausgestaltet ist als die Formelemente 16 und 20. Es ist länger und bereits teilweise nach unten herausgezogen, so dass es sich bei dieser Ausführungsform um eine Ausführungsform handelt, bei der die Formelemente 16 - 20 von dem Muffeleinsatz im Übrigen lösbar sind. Das Formelement 18 weist einen Flansch 40 auf, der von unten an dem flächigen Abschnitt 14 anliegt und durch die flächige Auflage des flächigen Abschnitts 14 auf der Muffelbasis 26 dort angedrückt wird. Bei Bedarf kann auch das betreffende Formelement 18 weggelassen werden und durch die erwähnte Abdeckscheibe die betreffende Öffnung 24 abgedeckt werden.

Aus Fig. 2 ist ferner ein Ansatzstutzen 42 ersichtlich. Ein derartiger Ansatzstutzen ist als alternative Lösung für die Verbindung zwischen Formelement und Flächenabschnitt 14 zu sehen. Dieser ist einstückig mit dem flächigen Abschnitt 14 und wird bei eingesetztem Formelement von diesem durchtreten.

Bei dieser Ausführungsform mit derartigen Stutzen lässt sich auch der Muffeleinsatz 12 nach Erhärten der Muffelmasse der Muffel 34 ohne Weiteres wie eine Haut abziehen, denn die Kürze der axialen Erstreckung des Stutzens 42 verhindert, dass sich dieser nennenswert im Material der Muffel 34 verankert.

Mindestens die Formelemente 16 - 20 sind so ausgebildet, dass sie rückstandsfrei ausbrennbar sind. Dies bedeutet, dass sie in den zylindrisch ausgebildeten Presskanälen der Muffel 34 verbleiben können, dort jedoch verdampfen. Bei der Ausführungsform gemäß Fig. 1 verdampft zusätzlich der Rest des Muffeleinsatzes 12, während bei der Ausführungsform mit dem Stutzen 42 der Muffeleinsatz 12 im Übrigen - also abgesehen von den Formelementen - abgezogen werden kann und insofern wiederverwendbar ist.

Die Muffelbasis 26 ist jedenfalls nicht dafür bestimmt, ausgebrannt zu werden und ist stets als wiederverwendbares Element ausgestaltet. Hingegen kann die Manschette 36 nach Aushärten der Muffel in an sich bekannter Weise von dieser abgeschält werden, wobei sie meist zerstört wird.

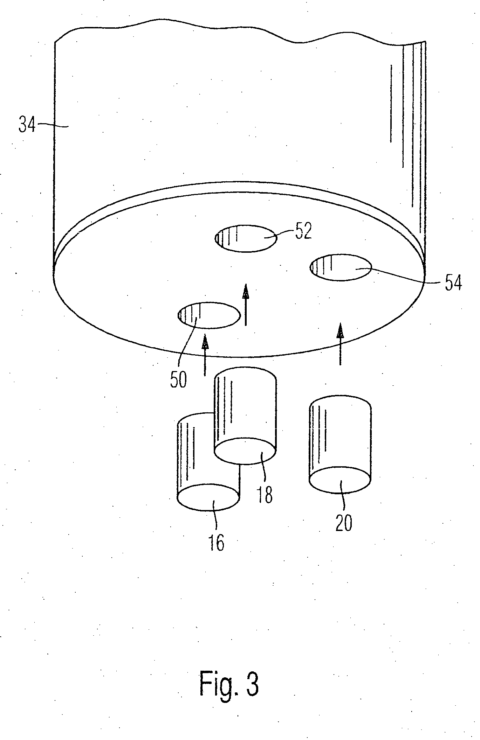

Aus Fig. 3 ist ersichtlich, wie sich die Presskanäle 50, 52 und 54 in der Muffel 34 erstrecken, nachdem sie von den Formelementen 16, 18 und 20 erzeugt worden sind. Auch wenn die Formelemente 16 - 20 ausbrennbar sind, mag es im Einzelfall gerade durch die vergleichsweise geringe Wandstärke der Formelemente 16 - 20 gelingen, sie rückstandsfrei oder mindestens teilweise aus den Presskanälen 50 - 54 zu entfernen.

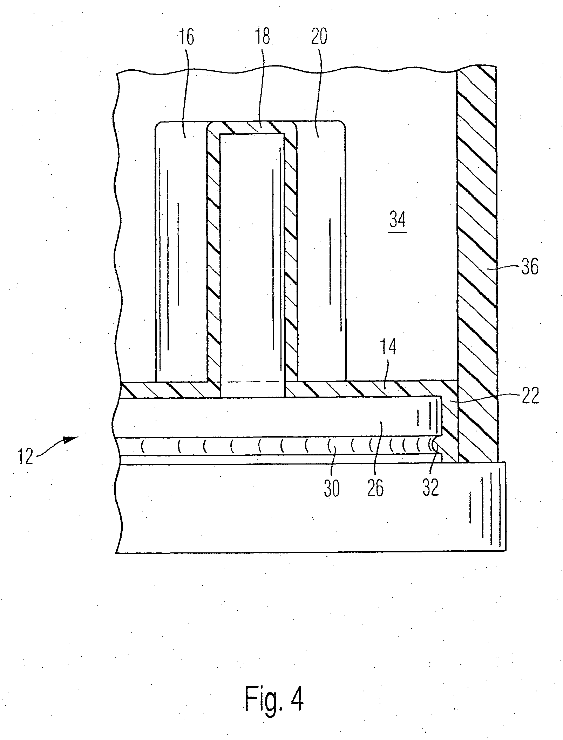

Aus Fig. 4 ist in vergrößerter Darstellung ersichtlich, wie sie sich in die Muffel 34 erstrecken. Sie weisen eine etwas geringere Wandstärke als der flächige Abschnitt 14 des Muffeleinsatzes 12 auf und ruhen mit ihrer Unterseite auf der Muffelbasis 26.

Anstelle eines Vorsprungs 32, der in die Nut 30 eingreift, kann auch ein ringförmiger Vorsprung vorgesehen sein, oder es kann eine entsprechende Sacklochbohrung in der Muffelbasis 26 vorgesehen sein, die für den Eingriff des Vorsprungs 32 bestimmt ist.

Es versteht sich, dass anstelle dessen auch ein Vorsprung an der Muffelbasis vorgesehen sein kann, der in eine entsprechende Ausnehmung an dem Kragen 22 eingreift.

## Patentansprüche

1. Vorrichtung zum Anfertigen einer Muffel, mit der Zähnrestaurationsteile unter Zuhilfenahme einer Einbettmasse, wenigstens eines Pressrohlings sowie einer Pressvorrichtung herstellbar sind, wobei die Vorrichtung eine Muffelbasis, eine die Muffelbasis umgebende rohrförmige Manschette und wenigstens einen auf der Muffelbasis angeordneten, von die-ser trennbaren Muffeleinsatz aufweist, **dadurch gekennzeichnet, dass** mindestens zwei parallel zueinander verlaufende und voneinander beabstandete, zylindrische und ausbrennbare Presskanal-Formelemente (16, 18, 20) von einem flächigen Abschnitt (14) des ausbrennbaren Muffeleinsatzes (12) in einer von der Muffelbasis (26) abgewandten Richtung abragen, die wenigstens an einer freien Stirnfläche, die dem flächigen Abschnitt gegenüberliegt, geschlossen ausgebildet sind.

2. Vorrichtung nach Anspruch 1, **dadurch gekennzeichnet, dass** die Wandstärke der Formelemente (18, 18, 20) im Wesentlichen der Wandstärke des flächigen Abschnitts (14) entspricht oder bis zu 90 Prozent geringer als dieser ist und dass die Wandstärke jedes Formelements (16, 18, 20) wenigstens dem 0,03-fachen Durchmesser, bevorzugt höch-stens dem 0,2-fachen Durchmesser, eines Formelements (16, 18, 20) entspricht.

3. Vorrichtung nach einem der vorhergehenden Ansprüche, **dadurch gekennzeichnet, dass** der Muffeleinsatz (12) und die Formelemente (16, 18, 20) als einstückiges Teil ausgebildet sind.

4. Vorrichtung nach einem der vorhergehenden Ansprüche, **dadurch gekennzeichnet, dass** die Muffelbasis (26) den Muffeleinsatz (12) mindestens im Bereich des flächigen Abschnitts (14) aussteift und die Formelemente (16,18, 20) des Muffeleinsatzes (12) sich auf der Muffelbasis (26) abstützen.

5. Vorrichtung nach einem der vorhergehenden Ansprüche, **dadurch gekennzeichnet, dass** auf der dem flächigen Abschnitt (14) gegenüberliegenden Stirnfläche der Formelemente (16, 18, 20) wenigstens ein Angusskanal für wenigstens ein Dentalrestaurationsteil anbringbar ist, und/oder der kleinste Abstand zwischen zwei zylindrischen Formelementen (16, 18, 20) wenigstens 0,5 mm beträgt.

6. Vorrichtung nach einem der vorhergehenden Ansprüche, **dadurch gekennzeichnet, dass** der flächige Abschnitt (14) des Muffeleinsatzes (12), insbesondere mit einem sich nach unten erstreckenden Kragen (22), formschlüssig mit der Muffelbasis (26) verbindbar ist.

7. Vorrichtung nach einem der vorhergehenden Ansprüche, **dadurch gekennzeichnet, dass** der Muffeleinsatz (12) in wenigstens eine Vertiefung der Muffelbasis (26) ragt, und/ oder wenigstens ein Vorsprung (32) des Muffeleinsatzes (12) in wenigstens eine Sacklochbohrung der Muffelbasis (26) ragt oder wenigstens teilweise in eine zumindest teilwei-se umlaufend ausgebildete Nut (30) an der Muffelbasis (26) ragt.

8. Vorrichtung nach Anspruch 7, **dadurch gekennzeichnet, dass** die Muffelbasis (26) zumindest im Bereich der Nut (30) radial elastisch ausgebildet ist.

9. Vorrichtung nach Anspruch 7 oder 8, **dadurch gekennzeichnet, dass** die auf der Muffelbasis (26) aufgesteckte Manschette (36) den in die Nut (30) ragenden Teil des flächigen Abschnitts (14) an der Muffelbasis (26), insbesondere in der Nut (30) der Muffelbasis, fixiert.

10. Vorrichtung nach einem der vorhergehenden Ansprüche, **dadurch gekennzeichnet, dass** der Aussendurchmesser des flächigen Abschnitts (14) höchstens dem Innendurchmesser der Manschette (36) entspricht, und/oder der Aussendurchmesser der Form-elemente (16, 18, 20) 6 mm bis 20 mm beträgt.

11. Vorrichtung nach einem der vorhergehenden Ansprüche, **dadurch gekennzeichnet, dass** der Muffeleinsatz (12) mehrere Formelemente (16, 18, 20) aufweist, die kreisförmig oder quadratisch oder kreuzförmig oder rechteckig oder bogenförmig oder elliptisch oder in einer Reihe angeordnet sind, insbesondere in der inneren Hälfte des Durchmessers des Muffeleinsatzes (12).

12. Vorrichtung nach einem der vorhergehenden Ansprüche, **dadurch gekennzeichnet, dass** die Formelemente (16, 18, 20) unterschiedlich hoch ausgebildet sind und/oder unterschiedliche Durchmesser haben.

13. Vorrichtung nach einem der vorhergehenden Ansprüche, **dadurch gekennzeichnet, dass** der Hohlraum der Formelemente (16, 18, 20), mit insbesondere stiftförmigen Elementen bestückbar ist, deren Durchmesser dem Innendurchmesser des Formelements (16, 18, 20) entspricht und die sich an der Muffelbasis (26) abstützen.

## Claims

1. A device for making a muffle, with which dental restoration parts can be produced with the ad of an embedding compound, at least one press blank and a pressing device, the device having a muffle base, a tubular sleeve surrounding the muffle base and at least one muffle insert which is arranged on the muffle base and can be separated from it, **characterized in that** at least two cylindrical and cauterizable press-channel forming elements (16, 18, 20) which extend parallel to one another and are spaced apart from one another protrude from a flat-formed portion (14) of the cauterizable muffle insert (12) in a direction away from the muffle base (26), which elements are formed in a closed manner at least on one free end face opposite from the flat-formed portion.

2. The device as claimed in claim 1, **characterized in that** the wall thickness of the forming elements (16, 18, 20) substantially corresponds to the wall thickness of the flat-formed portion (14) or is up to 90 percent smaller than it and **In that** the wall thickness of each forming element (16, 18, 20) corresponds to at least 0.03 times the diameter, with preference at most 0 2 times the diameter, of a forming element (16, 18, 20)

3. The device as claimed in one of the preceding claims, **characterized in that** the muffle insert (12) and the forming elements (16, 18, 20) are formed as one-piece parts

4. The device as claimed in one of the preceding claims, charactenzed in that the muffle base (26) stiffens the muffle insert (12), at least In the region of the flat-formed portion (14), and the forming elements (16, 18, 20) of the muffle insert (12) are supported on the muffle base (26)

5. The device as claimed in one of the preceding claims, charactenzed in that at least one feed channel for at least one dental restoration part can be attached on the end face of the forming elements (16, 18, 20) opposite from the flat-formed portion (14), and/or the smallest spacing between two cylindrical forming elements (16, 18, 20) is at least 0 5 mm.

6. The device as claimed in one of the preceding claims, **characterized in that** the flat-formed portion (14) of the muffle insert (12), in particular by means of a downwardly extending collar (22), can be positively connected to the muffle base (26)

7. The device as claimed in one of the preceding claims, **characterized In that** the muffle insert (12) protrudes into at least one depression of the muffle base (26) and/or at least one projection (32) of the muffle insert (12) protrudes into at least one blind hole bore of the muffle base (26) or at least partially into a groove (12) on the muffle base (28) formed at least partially around it

8. The device as claimed in claim 7, **characterized in that** the muffle base (26) is formed in a radially elastic manner, at least in the region of the groove (30)

9. The device as claimed in claim 7 or 8, **characterized in that** the sleeve (36) fitted onto the muffle base (26) fixes the part of the flat-formed portion (14) that protrudes into the groove (30) on the muffle base (26), In particular in the groove (30) of the muffle base

10. The device as claimed in one of the preceding claims, **characterized In that** the outside diameter of the flat-formed portion (14) corresponds at most to the inside diameter of the sleeve (36), and/or the outside diameter of the forming elements (16, 18, 20) is 6 mm to 20 mm.

11. The device as claimed in one of the preceding claims, **characterized in that** the muffle insert (12) has a number of forming elements (16, 18, 20), which are arranged in a circular or square or cruciform or rectangular or arcuate or elliptical manner or in a row, in particular in the inner half of the diameter of the muffle insert (12)

12. The device as claimed in one of the preceding claims, characterized m that the forming elements (16, 18, 20) are formed with different heights and/or have different diameters

13. The device as claimed in one of the preceding claims, **characterized in that** the hollow space of the forming elements (16, 18, 20) can be fitted with m particular pin-shaped elements, the diameter, of which corresponds to the inside diameter of the forming element (16, 18, 20) and which are supported on the muffle base (26)

## Revendications

1. Dispositif de crémation d'une moufle, au moyen duquel il est possible de fabriquer des parties de restauration dentaire à l'aide d'une masse dentaire, d'au moins une ébauche de presse et d'un dispositif de pressage, le dispositif comprenant une base de moufle, une manchette tubulaire entourant la base de moufle et au moins un insert de moufle disposé sur la base de moufle et pouvant être séparé de celle-ci, **caractérisé en ce qu'**au moins deux éléments de formation de canal de pressage (16, 18, 20) s'étendant parallèlement l'un à l'autre, espacés l'un de l'autre, cylindriques font saillie d'une section plane (14) de l'insert de moufle (12) combustible dans une direction opposée à la base de moufle (26), qui sont fermées au moins sur une surface avant libre qui est opposée à la section plane.

2. Dispositif selon la revendication 1, **caractérisé en ce que** l'épaisseur de paroi des éléments de formation (16, 18, 20) correspond sensiblement à l'épaisseur de la paroi de la section plane (14) ou est inférieure à concurrence de 90 pour cent de celle-ci et **en ce que** l'épaisseur de la paroi de l'élément de formation (16, 18, 20) correspond au moins à 0,03 fois le diamètre, de préférence au maximum à 0,2 fois le diamètre d'un élément de formation (16, 18, 20).

3. Dispositif selon l'une quelconque des revendications précédentes, **caractérisé en ce que** l'insert de moufle (12) et les éléments de formation (16, 18, 20) sont conçus d'une seule pièce.

4. Dispositif selon l'une quelconque des revendications précédentes, **caractérisé en ce que** la base de moufle (26) renforce l'insert de moufle (12) au moins dans la zone de la section plane (14) et les éléments de formation (16, 18, 20) de l'insert de moufle (12) s'appuient sur la base de moufle (26).

5. Dispositif selon l'une quelconque des revendications précédentes, **caractérisé en ce qu'**au moins un canal de coulée pour au moins une partie de restauration dentaire peut être agencé sur la surface avant des éléments de formation (16, 18, 20) opposée à la section plane (14), et/ou l'écart le plus petit entre deux éléments de formation cylindriques (16, 18, 20) atteint au moins 0,5 mm.

6. Dispositif selon l'une quelconque des revendications précédentes, **caractérisé en ce que** la section plane (14) de l'insert de moufle (12) peut être reliée, en particulier au moyen d'un collet (22) s'étendant vers le bas, par coopération de formes à la base de moufle (26).

7. Dispositif selon l'une quelconque des revendications précédentes, **caractérisé en ce que** l'insert de moufle (12) fait saillie dans au moins un creux de la base de moufle (26), et/ou au moins une partie saillante (32) de l'insert de moufle (12) fait saillie dans au moins un trou borgne de la base de moufle (26) ou fait saillie sur la base de moufle (26) au moins en partie dans une rainure (30) au moins en partie circulaire.

8. Dispositif selon la revendication 7, **caractérisé en ce que** la base de moufle (26) est formée de mamère radialement élastique au moins dans la zone de la rainure (30).

9. Dispositif selon la revendication 7 ou 8, **caractérisé en ce que** la manchette (36) emboitée sur la base de moufle (26) fixe la partie, faisant saillie dans la rainure (30) de la section plane (14) sur la base de moufle (26), en particulier dans la rainure (30) de la base de moufle.

10. Dispositif selon l'une quelconque des revendications précédentes, **caractérise en ce que** le diamètre extérieur de la section plane (14) correspond au maximum au diamètre intérieur de la manchette (36), et/ou le diamètre extérieur des éléments de formation (16, 18, 20) atteint 6 à 20 mm.

11. Dispositif selon l'une quelconque des revendications précédentes, **caractérisé en ce que** l'insert de moufle (12) comprend plusieurs éléments de formation (16, 18, 20), qui sont circulaires ou carrés ou cruciformes ou rectangulaires ou arqués ou elliptiques ou disposés en rangée, en particulier dans la moitié intérieure du diamètre de l'insert de moufle (12).

12. Dispositif selon l'une quelconque des revendications précédentes, **caractérisé en ce que** les éléments de formation (16, 18, 20) présentent des hauteurs différentes et/ou des diamètres différents

13. Dispositif selon l'une quelconque des revendications précédentes, **caractérisé en ce que** la cavité des éléments de formation (16, 18, 20) peut être équipée d'éléments particulièrement en forme de broches dont le diamètre correspond au diamètre antérieur de l'élément de formation (16, 18, 20) et qui s'appuient sur la base de moufle (26).
